# EUROPÄISCHE PATENTSCHRIFT

(11) **EP 1 478 069 B1**
(45) Veröffentlichungstag und Bekanntmachung des Hinweises auf die Patenterteilung: **14.07.2010**
(21) Anmeldenummer: 03010906.0
(22) Anmeldetag: 15.05.2003
(51) Int. Cl.: H02H 3/33

(54) **Allstromsensitive Fehlerstrom-Schutzeinrichtung**
All fault-current sensitive protection device
Dispositif de protection sensible à tout courant de défaut

(43) Veröffentlichungstag der Anmeldung: 17.11.2004
(73) Patentinhaber: SIEMENS AKTIENGESELLSCHAFT, 80333 München (DE)
(72) Erfinder: Bauer, Bernhard, 93080 Pentling (DE); Huber, Markus, 93083 Obertraubling (DE); Schmid, Reinhard, 93051 Regensburg (DE)

(56) Entgegenhaltungen:
- EP-A- 0 866 536
- EP-A- 1 011 183
- WO-A-01/20741
- WO-A-86/06222
- DE-A- 19 735 412
- SOLLEDER R: "ALLSTROMSENSITIVE FEHLERSTROM-SCHUTZEINRICHTUNG FUER INDUSTRIEANWENDUNG" ELEKTROTECHNISCHE ZEITSCHRIFT - ETZ, VDE VERLAG GMBH. BERLIN, DE, Bd. 115, Nr. 16, 1. August 1994 (1994-08-01), Seiten 896-898,900-901, XP000471380 ISSN: 0948-7387

## Beschreibung

Die Erfindung betrifft eine allstrom-sensitive Fehlerstrom-Schutzeinrichtung mit einer ersten, netzspannungsunabhängigen Sensoreinrichtung und einer zweiten, netzspannungsabhängigen Sensoreinrichtung.

Bei einem Schutzschalter unterscheidet man zwischen einem netzspannungsunabhängigen Fehlerstrom-Schutzschalter (FI-Schutzschalter) und einem netzspannungsabhängigen Differenzstrom-Schutzschalter (DI-Schutzschalter). Die beiden Schutzschalter weisen jeweils einen Summenstromwandler auf, durch den die Leiter des zu überwachenden Leitungsnetzes geführt sind. Beide Summenstromwandler weisen jeweils einen Kern mit einer Wicklung auf, an die eine Sensoreinrichtung angeschlossen ist, welche wiederum mit einer Auslöseeinrichtung verbunden ist. Tritt im Leitungsnetz ein unzulässiger Fehlerstrom auf, so wird dieser vom Summenstromwandler von der zugehörigen Sensoreinrichtung erfasst. Über die Auslöseeinrichtung werden die Leiter des Leitungsnetzes getrennt.

Durch eine Kombination eines pulsstromsensitiven FI-Schutzschalters und eines gleichstromsensitiven DI-Schutzschalters erhält man eine so genannte allstromsensitive Fehlerstrom-schutzeinrichtung, welche in allen Versorgungsspannungsfällen die Schutzfunktion aufrecht erhält. Eine derartige Fehlerstrom-Schutzeinrichtung ist beispielsweise aus der DE 197 35 412 A1 bekannt.

Die bekannte allstromsensitive Fehlerstrom-Schutzeinrichtung wird in elektrischen Anlagen zum Personen- und Anlagenschutz eingesetzt.

Beim Fehlerstrom unterscheidet man zwischen einem glatten Gleichfehlerstrom und einem pulsierenden Gleichfehlerstrom sowie einem Wechselfehlerstrom.

Beim Auftreten eines pulsierenden Gleichfehlerstromes oder eines Wechselfehlerstromes wird in der Wicklung des betreffenden Summenstromwandlers eine Spannung induziert, die durch die zugehörige Sensoreinrichtung ausgewertet wird. Zur Erfassung der beiden Stromarten kann also die magnetische Induktion herangezogen werden (pulsstromsensitives Erfassungsprinzip).

Beim Auftreten eines glatten Gleichfehlerstromes ist dieses Messprinzip nicht anwendbar, da sich der magnetische Fluss durch die Wicklung des betreffenden Summenstromwandlers nicht ändert und damit keine Spannung induziert wird. Zur Erfassung eines glatten Gleichfehlerstromes wird daher nach einem anderen Prinzip verfahren und zwar wird die Wicklung des Summenstromwandlers mit einer Wechselspannung beaufschlagt, so dass der Kern des Summenstromwandlers wechselweise magnetisiert wird. Der Kern des Summenstromwandlers wird also durch die Wechselspannung ausgesteuert. Tritt nun ein Gleichfehlerstrom auf, so verschiebt sich die Magnetisierung des Kerns, welche letztendlich von der Auswerteeinheit erfasst wird (gleichstromsensitives Erfassungsprinzip).

Zur Erfassung eines glatten Gleichfehlerstromes und eines pulsierenden Gleichfehlerstromes bzw. Wechselfehlerstromes werden bei der allstromsensitiven Fehlerstrom-Schutzeinrichtung gemäß der DE 197 35 412 A1 die beiden vorgenannten unterschiedlichen Erfassungsprinzipien mit getrennten Summenstromwandlern verwendet. Die pulsstromsensitive Erfassung ist bei der aus der DE 197 35 412 A1 bekannten Fehlerstrom-Schutzeinrichtung netzspannungsunabhängig realisiert, wohingegen die gleichstromsensitive Erfassung netzspannungsabhängig realisiert ist.

Bei der bekannten Fehlerstrom-Schutzeinrichtung überwachen die erste Sensoreinrichtung und die zweite Sensoreinrichtung über jeweils einen eigenen Summenstromwandler ständig parallel das Leitungsnetz und arbeiten parallel auf eine Auslöseeinrichtung.

Um eine Rückwirkung der ersten Sensoreinrichtung auf das Auslöseverhalten der zweiten Sensoreinrichtung zu vermeiden, ist in der zur Auslöseeinrichtung führenden Steuerleitung eine erste Entkopplungseinrichtung geschaltet.

Bei der allstromsensitiven Fehlerstrom-Schutzeinrichtung gemäß der DE 197 35 412 A1 beeinflussen sich die Auslösezeiten und Auslöseströme gegenseitig nicht, so dass bei einer Kombination der beiden Fehlerstrom-Auslöseschaltungen die charakteristischen Daten für die einzelnen Fehlerstrom-Auslöseschaltungen, d.h. der Nennfehlerstrom und die Auslösezeitverzögerung der ihnen jeweils zugeordneten Fehlerstromarten, auch bei Kombination unverändert bleiben. Damit können die geforderten Auslösefehlerstrom- und Auslösezeitgrenzen bei Wechselfehlerstrom, pulsierendem Gleichfehlerstrom und glattem Gleichfehlerstrom entsprechend den Vorschriften (VDE, ÖVE, EN, IEC) eingehalten werden.

Die aus der DE 197 35 412 A1 bekannte Fehlerstrom-Schutzeinrichtung weist jedoch aufgrund ihres Aufbaus (2 Summenstromwandler, bis zu 2 Entkopplungseinrichtungen) ein relativ großes Bauvolumen und damit einen entsprechenden Energieverbrauch sowie eine entsprechende Wärmeabstrahlung auf.

Die WO 86/06222 A1 beschreibt eine Fehlerstrom-Schutzeinrichtung mit einer ersten, netzspannungsunabhängigen Sensoreinrichtung zum Erfassen von Wechselfehlerstrom und einer zweiten, netzspannungsabhängigen Sensoreinrichtung zum Erfassen von ausschließlich Gleichfehlerstrom, wobei beide Sensoreinrichtungen gemeinsam mit einem Summenstromwandler gekoppelt sind. Bei einer Ausführungsform umfasst der Summenstromwandler sowohl eine Sekundärspule zur Kopplung mit der ersten Sensoreinrichtung und eine Tertiärspule zur Kopplung mit der zweiten Sensoreinrichtung. Bei einer anderen Ausführungsform umfasst der Summenstromwandler eine Spule, die mit beiden Sensoreinrichtungen gekoppelt ist.

Die EP 0 866 536 A2 beschreibt einen Fehlerstromschutzschalter für Allstrom, also Wechselstrom, Pulsstrom von Gleichrichterschaltungen und Gleichstrom, bei dem ein einziger Summenstromwandler mit einem Ringkern gleichermaßen als Pulsstromwandler für einen Pulsstromsignalzweig und als Gleichstromsignalgeber für einen Gleichstromsignalzweig verwendet wird. Bei einer Ausführungsform sind die beiden Zweige über jeweils unterschiedliche Frequenzen durchlassende Filter mit dem Summenstromwandler gekoppelt. Bei einer anderen Ausführungsform sind in jedem Zweig Schalteinheiten vorgesehen, die von einem Taktgenerator so beschaltet werden, dass jeweils die eine Schalteinheit eingeschaltet und die andere Schalteinheit ausgeschaltet ist und umgekehrt.

Aus der WO 01/20741 A1 ist eine allstromsensitive Fehlerstrom-Schutzeinrichtung bekannt, in der das Verfahren der gesteuerten Induktivität eingesetzt wird. In einer Anordnung hierfür ist ein Messwiderstand vorgesehen.

Aufgabe der vorliegenden Erfindung ist es, eine Fehlerstrom-Schutzreinrichtung der eingangs genannten Art zu schaffen, die einfacher aufgebaut ist und eine geringere Baugröße aufweist.

Die Aufgabe wird erfindungsgemäß durch eine allstromsensitive Fehlerstrom-Schutzreinrichtung mit den Merkmalen des Anspruchs 1 gelöst. Vorteilhafte Ausgestaltungen der erfindungsgemäßen Fehlerstrom-Schutzreinrichtung sind jeweils Gegenstand von weiteren Ansprüchen.

Anstelle von zwei Summenstromwandlern weist die Fehlerstrom-Schutzeinrichtung einen gemeinsamen Summenstromwandler für die erste Sensoreinrichtung und für die zweite Sensoreinrichtung auf. Damit wird gegenüber der bekannten Fehlerstrom-Schutzreinrichtung ein Summenstromwandler eingespart.

Solange die erfindungsgemäße Fehlerstrom-Schutzeinrichtung mit Spannung aus dem zu überwachenden Netz versorgt wird, ist über die Entkopplungseinrichtung die erste Sensoreinrichtung freigeschaltet und die zweite Sensoreinrichtung zugeschaltet. Die allstromsensitive Fehlerstrom-Schutzeinrichtung arbeitet damit ausschließlich auf die zweite Sensoreinrichtung. Sobald keine Spannung mehr vorhanden ist, schaltet die Entkopplungseinrichtung die zweite Sensoreinrichtung weg und die erste Sensoreinrichtung zu. Die allstromsensitive Fehlerstrom-Schutzeinrichtung arbeitet damit ausschließlich auf die erste Sensoreinrichtung.

Aufgrund der Entkopplungseinrichtung tritt keine gegenseitige Beeinflussung der ersten Sensoreinrichtung (netzspannungsunabhängige FI-Erfassung) und der zweiten Sensoreinrichtung (netzspannungsabhängigen DI-Erfassung)auf. Damit können beide Sensoreinrichtungen jeweils für sich getrennt betrachtet und entsprechend den Erfordernissen dimensioniert werden.

Trotz des einfacheren Aufbaus können damit durch die erfindungsgemäße Fehlerstrom-Schutzeinrichtung die geforderten Auslösefehlerstrom- und Auslösezeitgrenzen bei Wechselfehlerstrom, pulsierendem Gleichfehlerstrom und glattem Gleichfehlerstrom entsprechend den Vorschriften (VDE, ÖVE, EN, IEC) eingehalten werden.

Gemäß einer besonders vorteilhaften Ausgestaltung der Erfindung ist die Entkopplungseinrichtung als Umschalteinrichtung ausgeführt. Eine derartige Ausführungsform zeichnet sich durch einen besonders einfachen konstruktiven Aufbau aus. Die Umschalteinrichtung kann elektromechanisch oder elektronisch sein.

Es ist möglich, dass die Wicklung des Summenstromwandlers aus zwei getrennten Wicklungen besteht, wobei die eine Wicklung für die erste Sensoreinrichtung und die andere Wicklung für die zweite Sensoreinrichtung vorgesehen ist.

Es kann eine Selbstüberwachungseinrichtung vorgesehen sein, durch die im Fehlerfall die Auslöseeinrichtung betätigbar ist.

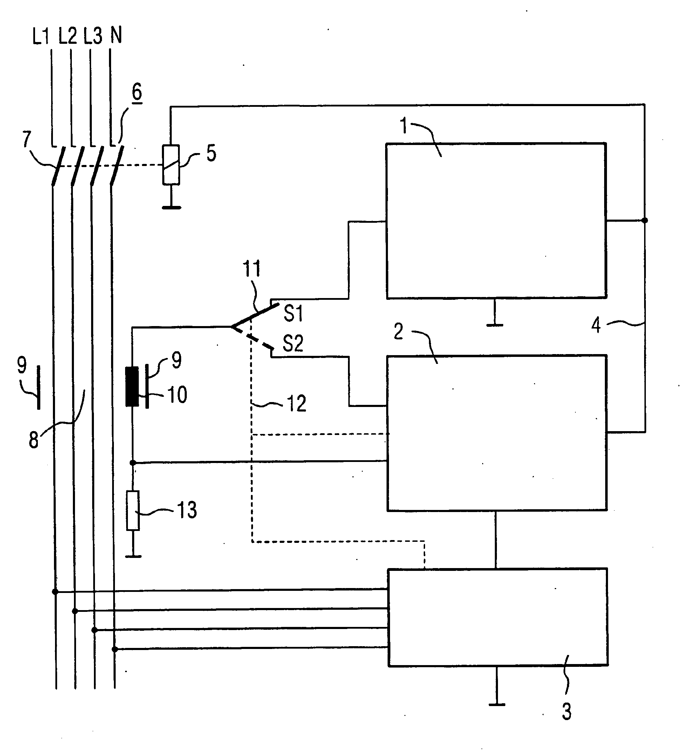

Ein Ausführungsbeispiel der Erfindung wird nachfolgend anhand der Zeichnung näher erläutert.

Die in der einzigen Figur dargestellte Ausführungsform der allstromsensitiven Fehlerstrom-Schutzeinrichtung umfasst eine erste, netzspannungsunabhängige Sensoreinrichtung 1 sowie eine zweite, netzspannungsabhängige Sensoreinrichtung 2, die von einem Netzteil 3 mit Spannung versorgt wird. Die erste Sensoreinrichtung 1 ist für die Erfassung von Wechselfehlerströmen und pulsierenden Gleichfehlerströmen ausgelegt. Die zweite Sensoreinrichtung 2 dient zur Erfassung von glatten Gleichfehlerströmen, und optional zur Erfassung von Wechselfehlerströmen und pulsierenden Gleichfehlerströmen.

Die erste Sensoreinrichtung 1 und die zweite Sensoreinrichtung 2 sind bei dem gezeigten Ausführungsbeispiel parallel zueinander an eine Steuerleitung 4 eines Relais 5 einer Auslöseeinrichtung 6 angeschlossen. Das Relais 5 wirkt auf einen zur Auslöseeinrichtung 6 gehörenden Schaltmechanismus 7.

Die Fehlerstrom-Schutzeinrichtung weist weiterhin einen Summenstromwandler 8 auf, der zur Überwachung eines mehrphasigen Netzes mit den Außenleitern L1, L2, L3 und dem Nullleiter N dient. Der Summenstromwandler 8 weist einen Kern 9 auf, der eine Wicklung 10 trägt. Die Wicklung 10 bildet die Sekundärwicklung für die erste Sensoreinrichtung 1. Die Primärwicklungen werden hierbei von den Außenleitern L1, L2 und L3 und dem Nullleiter N gebildet. Die Wicklung 10 bildet weiterhin die Steuerwicklung für die zweite Sensoreinrichtung 2.

Um eine gegenseitige Beeinflussung der beiden Sensoreinrichtungen 1 und 2 zuverlässig zu vermeiden, ist die Wicklung 10 über eine Entkopplungseinrichtung 11 entweder an die erste Sensoreinrichtung 1 oder an die zweite Sensoreinrichtung 2 schaltbar.

Im dargestellten Ausführungsbeispiel ist die Entkopplungseinrichtung 11 als Umschalteinrichtung ausgeführt.

Solange die Fehlerstrom-Schutzeinrichtung über das Netzteil 3 mit Spannung aus dem zu überwachenden Netz versorgt wird, ist über die Umschalteinrichtung 11 die erste Sensoreinrichtung 1 freigeschaltet und die zweite Sensoreinrichtung 2 zugeschaltet. Die Umschalteinrichtung 11 befindet sich in diesem Fall in der Schaltstellung S2. Die allstromsensitive Fehlerstrom-Schutzeinrichtung arbeitet damit ausschließlich auf die zweite Sensoreinrichtung 2. Sobald keine Spannung mehr vorhanden ist, schaltet die Umschalteinrichtung 11 die zweite Sensoreinrichtung 2 weg und die erste Sensoreinrichtung 1 zu. die Umschalteinrichtung 11 befindet sich dann in der Schaltstellung S1. Die allstromsensitive Fehlerstrom-Schutzeinrichtung arbeitet damit ausschließlich auf die erste Sensoreinrichtung 1. Die Umschaltung zwischen den Schaltstellungen S1 und S2 erfolgt aufgrund von Schaltbefehlen, die die Umschalteinrichtung 11 über eine Steuerleitung 12 vom Netzteil 3 erhält.

Aufgrund der Entkopplungseinrichtung 11 (Umschalteinrichtung) tritt keine gegenseitige Beeinflussung der ersten Sensoreinrichtung 1 (netzspannungsunabhängige FI-Erfassung) und der zweiten Sensoreinrichtung 2 (netzspannungsabhängigen DI-Erfassung)auf. Damit können beide Sensoreinrichtungen 1 und 2 jeweils für sich getrennt betrachtet und entsprechend den Erfordernissen dimensioniert werden.

Die Wicklung 10 ist weiterhin über einen Messwiderstand 13 auf Bezugspotential geführt. Der Spannungsabfall am Messwiderstand 13 wird in der zweiten Sensoreinrichtung 2 ausgewertet. Beim Vorliegen eines Auslösekriteriums wirkt die zweite Sensoreinrichtung 2 auf das Relais 5 der Auslöseeinrichtung 6, wodurch der Schaltmechanismus 7 geöffnet wird. Durch die Auswertung des Spannungsabfalls am Messwiderstand 13 können durch die zweite Sensoreinrichtung 2 nicht nur glatte Gleichfehlerströme, sondern darüber hinaus auch Wechselfehlerströme und pulsierende Gleichfehlerströme erfasst werden.

Dies ist notwendig, da bei anstehender Betriebsspannung die pulsstromsensitive Sensoreinrichtung 1 inaktiv ist.

Sind zwei Außenleiter und der N-Leiter unterbrochen, steht am Ausgang des Netzteiles 3 keine Betriebsspannung für die Sensoreinrichtung 2 zur Verfügung. In diesem Fall wird auf die pulsstromsensitive Sensoreinrichtung 1 umgeschaltet. Die Schutzfunktion ist auch in diesem Fall umfassend gewährleistet, da kein glatter Gleichfehlerstrom auftreten kann, wenn nur noch ein Außenleiter spannungsführend ist.

## Patentansprüche

1. Allstromsensitive Fehlerstrom-Schutzeinrichtung mit
- einer ersten, netzspannungsunabhängigen Sensoreinrichtung (1) für Wechselfehlerstrom und pulsierenden Gleichfehlerstrom und mit
- einer zweiten, netzspannungsabhängigen Sensoreinrichtung (2) für glatten **Gleichfehlerstrom, wobei**
- die erste Sensoreinrichtung (1) und die zweite Sensoreinrichtung (2) parallel zueinander an eine Steuerleitung (4) einer Auslöseeinrichtung (6) angeschlossen sind, und
- die Fehlerstrom-Schutzeinrichtung einen Summenstromwandler (8) umfasst, dessen Wicklung (10) die Sekundärwicklung für die erste Sensoreinrichtung (1) und die Steuerwicklung für die zweite Sensoreinrichtung (2) bildet, wobei
- die Fehlerstrom-Schutzeinrichtung eine einzige Entkopplungseinrichtung (11) für die Sensoreinrichtungen (1, 2) umfasst, **dadurch gekennzeichnet, dass** die Wicklung (10) in einem ersten Zustand der Entkopplungseinrichtung (11)über selbige an die erste Sensoreinrichtung (1) angebunden ist und in einem zweiten Zustand der Entkopplungseinrichtung (11) über selbige an die zweite Sensoreinrichtung (2) angebunden ist, und
- wobei die Wicklung (10) über einen Messwiderstand (13) auf Bezugspotential geführt ist und die zweite Sensoreinrichtung auch zum Erfassen von Wechselfehlerstrom und pulsierendem Gleichfehlerstrom ausgelegt ist.

2. Fehlerstrom-Schutzeinrichtung nach Anspruch 1, wobei
- die Entkopplungseinrichtung (11) als Umschalteinrichtung ausgeführt ist.

3. Fehlerstrom-Schutzeinrichtung nach Anspruch 1, wobei
- durch eine Selbstüberwachungseinrichtung im Fehlerfall die Auslöseeinrichtung (6) betätigbar ist.

4. Fehlerstrom-Schutzeinrichtung nach Anspruch 2, wobei
- die Umschalteinrichtung (11) als elektromechanische Umschalteinrichtung ausgeführt ist.

5. Fehlerstrom-Schutzeinrichtung nach Anspruch 2, wobei
- die Umschalteinrichtung (11) als elektronische Umschalteinrichtung ausgeführt ist.

6. Fehlerstrom-Schutzeinrichtung nach Anspruch 1, wobei
- die Wicklung (10) des Summenstromwandlers (8) aus zwei getrennten Wicklungen besteht, wobei die eine Wicklung für die erste Sensoreinrichtung (1) und die andere Wicklung für die zweite Sensoreinrichtung (2) vorgesehen ist.

## Claims

1. All-fault-current-sensitive protection device having
- a first sensor (1) independent of mains voltage for a.c and pulsating d.c. leakage currents and having
- a second sensor (2) dependent on mains voltage for smooth d.c. leakage currents, wherein
- the first sensor (1) and the second sensor (2) are connected parallel to one another to a control line (4) of a trigger device (6), and
- the fault-current protection device comprises a summation current converter (8) whose winding (10) forms the secondary winding for the first sensor (1) and the control winding for the second sensor (2), wherein
- the fault-current protection device comprises a single decoupling device (11) for the sensors (1, 2), **characterised in that** the winding (10) is connected in a first state of the decoupling device (11) via the same to the first sensor (1) and is connected in a second state of the decoupling device (11) via the same to the second sensor (2), and
- wherein the winding (10) is led via a measurement resistance (13) to reference potential and the second sensor is also designed to record a.c and pulsating d.c. leakage currents.

2. Fault-current protection device according to claim 1, wherein
- the decoupling device (11) is embodied as a switching device.

3. Fault-current protection device according to claim 1, wherein
- the trigger device (6) can be activated by a self-monitoring device in the event of a fault.

4. Fault-current protection device according to claim 2, wherein
- the switching device (11) is embodied as an electromagnetic switching device.

5. Fault-current protection device according to claim 2, wherein
- the switching device (11) is embodied as an electronic switching device.

6. Fault-current protection device according to claim 1, wherein
- the winding (10) of the summation current converter (8) consists of two separate windings, wherein the one winding is provided for the first sensor (1) and the other winding is provided for the second sensor (2).

## Revendications

1. Dispositif de protection sensible à tout courant de défaut comprenant
- un premier dispositif capteur indépendant de la tension de réseau (1) pour un courant de défaut alternatif et un courant de défaut continu pulsé et comprenant
- un second dispositif capteur dépendant de la tension de réseau (2) pour un courant de défaut continu lisse,
- le premier dispositif capteur (1) et le second dispositif capteur (2) étant connectés, parallèlement l'un à l'autre, à une ligne de commande pilote (4) d'un dispositif de déclenchement (6) et
- le dispositif de protection contre les courants de défaut comprend un transformateur de courant totalisateur (8) dont l'enroulement (10) forme l'enroulement secondaire pour le premier dispositif capteur (1) et l'enroulement de commande pour le second dispositif capteur (2),
- le dispositif de protection contre les courants de défaut comprenant un seul dispositif de découplage (11) pour les dispositifs capteurs (1, 2), **caractérisé en ce que** l'enroulement (10) est relié au premier dispositif capteur (1) dans un premier état du dispositif de découplage (11) par l'intermédiaire de ce dernier et est relié au second dispositif capteur (2) dans un second état du dispositif de découplage (11) par l'intermédiaire de ce dernier et
- l'enroulement (10) étant relié au potentiel de référence par le biais d'une résistance de mesure (13) et le second dispositif capteur étant conçu également pour détecter un courant de défaut alternatif et un courant de défaut continu pulsé.

2. Dispositif de protection contre les courants de défaut selon la revendication 1, le dispositif de découplage (11) étant exécuté en tant que dispositif de commutation.

3. Dispositif de protection contre les courants de défaut selon la revendication 1, le dispositif de déclenchement (6) pouvant être actionné par un dispositif de surveillance automatique en cas de défaut.

4. Dispositif de protection contre les courants de défaut selon la revendication 2, le dispositif de commutation (11) étant exécuté en tant que dispositif de commutation électromécanique.

5. Dispositif de protection contre les courants de défaut selon la revendication 2, le dispositif de commutation (11) étant exécuté en tant que dispositif de commutation électronique.

6. Dispositif de protection contre les courants de défaut selon la revendication 1, l'enroulement (10) du transformateur de courant totalisateur (8) étant formé de deux enroulements séparés, un enroulement étant prévu pour le premier dispositif capteur (1) et l'autre enroulement étant prévu pour le second dispositif capteur (2).
